# EUROPEAN PATENT APPLICATION

(11) **EP 4 491 692 A1**
(43) Date of publication of application: **15.01.2025**
(21) Application number: 23766888.4
(22) Date of filing: 08.03.2023
(51) Int. Cl.: C09K 5/04

(54) **COMPOSITION CONTAINING FLUOROETHYLENE, AND METHOD FOR STABILIZING SAID COMPOSITION**

(30) Priority: 08.03.2022 JP 2022035171
(71) Applicant: DAIKIN INDUSTRIES, LTD., Osaka-shi, Osaka 530-0001 (JP)
(72) Inventor: KARUBE, Daisuke, Osaka-Shi, Osaka 530-0001 (JP); ITO, Ryuo, Osaka-Shi, Osaka 530-0001 (JP); GOBOU, Kenji, Osaka-Shi, Osaka 530-0001 (JP); NAKAUE, Tsubasa, Osaka-Shi, Osaka 530-0001 (JP)
(74) Representative: Hoffmann Eitle
(86) International application number: PCT/JP2023/008856
(87) International publication number: WO 2023/171712

(57) **Abstract**

A composition comprising a refrigerant and an antioxidant, the refrigerant containing a fluoroethylene, the antioxidant being present in an amount of 1 to 20000 ppm by mass based on the mass of the fluoroethylene, and the total mass of the refrigerant and the antioxidant accounting for 95 mass% or more of the entire composition taken as 100 mass%.

## Description

### Technical Field

The present disclosure relates to a composition containing fluoroethylene and a method for stabilizing the composition.

### Background Art

Trans-1,2-difluoroethylene (below also simply referred to as "HFO-1132(E)") and other fluoroethylenes are used in various applications, including heat transfer media. The demand for such compounds is expected to continue increasing in the future.

Various methods have been investigated to inhibit the formation of hydrogen fluoride in compositions containing fluoroethylene. Patent Literature (PTL) 1 and Patent Literature (PTL) 2 each disclose a method comprising adding an acid scavenger or an antioxidant to a composition.

Patent Literature (PTL) 3 to Patent Literature (PTL) 5 each disclose a method comprising limiting the amount of oxygen contained in a composition or adding a remover for removing oxygen to a composition.

### Citation List

### Patent Literature

PTL 1: WO2020/017522
PTL 2: JP2021-14594A
PTL 3: JP2021-1167A
PTL 4: JP2021-1326A
PTL 5: JP2021-1722A

### Summary of Invention

### Technical Problem

In view of the above circumstances, an object of the present disclosure is to provide a fluoroethylene-containing composition in which acid formation is inhibited.

### Solution to Problem

Through extensive research to achieve the above object, the present inventors found that incorporation of an antioxidant can inhibit acid formation in compositions containing fluoroethylene. The present inventors conducted further research based on this finding and have accomplished the present disclosure.

Thus, the present disclosure provides the following compositions containing fluoroethylene and methods for stabilizing the compositions.

### Item 1.

A composition comprising
a refrigerant and
an antioxidant,
   the refrigerant containing fluoroethylene, wherein

the antioxidant is present in an amount of 1 to 20000 ppm by mass based on the mass of the fluoroethylene, and
the total mass of the refrigerant and the antioxidant accounts for 95 mass% or more of the entire composition taken as 100 mass%.

### Item 2.

The composition according to Item 2, comprising a refrigeration oil in an amount of 0 to 30000 ppm by mass based on the mass of the fluoroethylene.

### Item 3.

The composition according to Item 1 or 2, wherein the antioxidant is at least one member selected from the group consisting of phenols, alkyl catechols, benzoquinones, phenothiazines, terpenes, terpenoids, and phthalates.

### Item 4.

The composition according to Item 3, wherein the antioxidant is at least one member selected from the group consisting of dibutylhydroxytoluene, myrcene, pinene, and limonene.

### Item 5.

The composition according to any one of Items 1 to 4, further comprising oxygen, wherein the oxygen is present in an amount of 5000 ppm by mass or less based on the mass of the fluoroethylene.

### Item 6.

A method for stabilizing a composition containing fluoroethylene, the method comprising allowing a refrigerant and an antioxidant to be present together to obtain a composition comprising the refrigerant and the antioxidant,
the refrigerant containing fluoroethylene,
the antioxidant being present in an amount of 1 to 20000 ppm by mass based on the mass of the fluoroethylene, and
the total mass of the refrigerant and the antioxidant accounting for 95 mass% or more of the entire composition taken as 100 mass%.

### Item 7.

The composition according to Item 6, wherein the antioxidant is at least one member selected from the group consisting of dibutylhydroxytoluene and terpenes.

### Advantageous Effects of Invention

The composition according to the present disclosure as described above, which contains fluoroethylene, is inhibited from acid formation.

### Description of Embodiments

In the present specification, the terms "comprise," "contain," and "include" encompass the concepts of comprising, consisting essentially of, and consisting of. In the present specification, a numerical range indicated by "A to B" means A or more and B or less.

### 1. Composition Containing Fluoroethylene

The composition of the present disclosure comprises a refrigerant and an antioxidant, wherein the refrigerant contains fluoroethylene. The antioxidant content of the composition is 1 to 20000 ppm by mass based on the mass of the fluoroethylene. The total mass of the fluoroethylene, the antioxidant, and one or more other components with refrigerant functions, or the total mass of the refrigerant and the antioxidant, accounts for 95 mass% or more of the entire composition. The total mass of the fluoroethylene, the antioxidant, and other components with refrigerant functions preferably accounts for 97 mass% or more of the entire composition, and more preferably 99 mass% or more of the entire composition. There is no upper limit for the total mass of the refrigerant and the antioxidant. For example, the total mass of the refrigerant and the antioxidant preferably accounts for 100 mass%, more preferably 99.9 mass%, of the entire composition taken as 100 mass%.

In the present specification, the refrigerant includes at least compounds that are specified in ISO 817 (International Organization for Standardization) and that are given a refrigerant number (ASHRAE number), which represents the type of refrigerant with "R" at the beginning, and further includes refrigerants that have properties equivalent to those of such refrigerants, even though a refrigerant number is not yet given. Refrigerants are broadly classified into fluorocarbon compounds and non-fluorocarbon compounds in terms of compound structure. The fluorocarbon compounds include chlorofluorocarbons (CFC), hydrochlorofluorocarbons (HCFC), and hydrofluorocarbons (HFC).

In a long-term use or storage environment, the fluoroethylene-containing composition may gradually decompose to form hydrogen fluoride due to the presence of oxygen with fluoroethylene. As a result, there is a possibility that hydrogen fluoride that has become present in the composition containing fluoroethylene may cause damage to equipment.

As the fluoroethylene, a wide variety of known fluoroethylenes can be used without any limitation. Examples of preferably usable fluoroethylenes include trifluoroethylene, difluoroethylene, and monofluoroethylene. Among these, trans-1,2-difluoroethylene (HFO-1132(E)), cis-1,2-difluoroethylene (HFO-1132(Z)), 1,1,2-trifluoroethylene (HFO-1123), and fluoroethylene (HFO-1141) are preferred, and HFO-1132(E) is particularly preferred.

The refrigeration oil content of the composition of the present disclosure is, based on the mass of the fluoroethylene, preferably 30000 ppm by mass or less, more preferably 10000 ppm by mass or less, even more preferably 5000 ppm by mass or less, and most preferably no refrigeration oil content (0 ppm by mass). When the refrigeration oil content is 30000 ppm by mass or less based on the mass of the fluoroethylene, hydrogen fluoride is less likely to be formed in the composition, and degradation associated with acidification of the composition can be inhibited.

As the oxidant, a wide variety of known oxidants used in this technical field can be used without any limitation. Specific examples of antioxidants preferably usable are oxidants that are presumed to be effective in trapping radicals and thereby providing the effect of inhibiting a decomposition reaction, such as phenols, alkyl catechols, benzoquinones, phenothiazines, terpenes, terpenoids, and phthalates. Among these, dibutylhydroxytoluene (also known as "butylated hydroxytoluene"; below also simply referred to as "BHT"), and phenols such as hydroquinone, and terpenes such as myrcene, pinene, and limonene are preferable.

The antioxidant content is 1 ppm by mass or more, more preferably 10 ppm by mass or more, and most preferably 100 ppm by mass or more, based on the mass of the fluoroethylene. Setting the mass of the antioxidant to 1 ppm by mass or more based on the mass of the fluoroethylene can inhibit the decomposition of fluoroethylene and acid formation.

The antioxidant content is 20000 ppm by mass or less, preferably 10000 ppm by mass or less, and more preferably 2000 ppm by mass or less, based on the mass of the fluoroethylene. By setting the antioxidant content to 20000 ppm by mass or less based on the mass of the fluoroethylene, addition of an unnecessary amount of antioxidant can be avoided.

The fluoroethylene content and the antioxidant content of the composition of the present disclosure can be determined by sampling a specific amount of fluoroethylene in a liquid phase and measuring the amount of antioxidant contained therein by using an analytical method, such as gas chromatography and NMR. When the antioxidant is a solid and cannot be measured by these analytical methods, the antioxidant content can be calculated by evaporating the sampled liquid phase and measuring the weight of the antioxidant as the residue.

The composition of the present disclosure may further contain oxygen. The oxygen content of the composition is preferably 5000 ppm by mass or less, more preferably 3000 ppm by mass or less, and even more preferably 1000 ppm by mass or less, based on the mass of the fluoroethylene. Setting the oxygen content of the composition of the present disclosure to 5000 ppm by mass or less based on the mass of fluoroethylene can inhibit a decomposition reaction or a polymerization reaction of fluoroethylene and also inhibit the formation of hydrogen fluoride in the composition, thus suppressing the degradation of the composition.

The oxygen content of the composition of the present disclosure can be quantified by measuring the content of oxygen in a gas phase by using a commercially available gas chromatograph or oxygen analyzer and converting the measured value into the content of oxygen in the liquid phase.

The composition of the present disclosure may further contain water.

The water content of the composition of the present disclosure is preferably 100 ppm by mass or less, more preferably 50 ppm by mass or less, and even more preferably 20 ppm by mass or less, based on the mass of fluoroethylene. Setting the water content to 100 ppm by mass or less based on the mass of the fluoroethylene can inhibit solid formation due to a side reaction or the like, thus ensuring the stability of the composition.

The water content of the composition according to the present disclosure can be measured with a commercially available Karl Fischer moisture measurement device. The detection limit is usually 0.1 ppm by mass.

The composition according to the present disclosure may further contain additional compounds as substances other than those mentioned above as long as the effect or purpose of the composition is not impaired. Examples of additional compounds include at least one member selected from the group consisting of hydrogen fluoride, 1,1,1-trifluoroethane, propylene, acetylene, difluoromethane, trifluoromethane, fluoromethane, 1,1,2-trifluoroethylene (HFO-1123), 1,1-difluoroethane (HFC-152a), fluoroethane (HFC-161), 1,1,2-trifluoroethane (HFC-143), 2-chloro-1,1,1-trifluoroethane (HCFC-133b), 1-chloro-1,1,2-trifluoroethane (HCFC-133), 1,1-dichloro-2,2,2-trifluoroethane (HCFC-123), 1-chloro-1,2-difluoroethane (HCFC-142a), 1,2-difluoroethane (HFC-152), chlorodifluoromethane (HCFC-22), 1,1,1,2-tetrafluoroethane (HFC-134a), 1,1,2,2-tetrafluoroethane (HFC-134), pentafluoroethane (HFC-125), 2,3,3,3-tetrafluoropropene (HFO-1234yf), 1,2,3,3,3-pentafluoropropene (HFO-1225ye), 1,3,3,3-tetrafluoropropene (HFO-1234ze), 1,3,3,3-tetrafluoropropene (HFO-1234ze), 3,3,3-trifluoropropene (HFO-1243zf), and ethylene.

When the composition of the present disclosure contains one or more such additional compounds, the additional compound content is not limited. The additional compound content is, for example, preferably 0.1 ppm by mass or more and 10000 ppm by mass or less, based on the mass of the fluoroethylene.

When used as a heat transfer medium, the composition of the present disclosure may further contain one or more components with refrigerant functions other than fluoroethylene. Examples of such other components include 2,3,3,3-tetrafluoropropene (HFO-1234yf), 1,3,3,3-tetrafluoropropene (HFO-1234ze), 1,1,2-trifluoroethylene (HFO-1123), 1,1-difluoroethylene (HFO-1132a), 1,1,1,2-tetrafluoroethane (HFC-134a), 1,1,1-trifluoroethane (HFC-143a), 1,1-difluoroethane (HFC-152a), difluoromethane (HFC-32), iodotrifluoromethane, carbon dioxide, propane, butane, and isobutane. When the composition of the present disclosure contains these components, the total content of such other components is preferably 3 to 97 mass%, and more preferably 30 to 90 mass%, based on the total amount of the components with refrigerant functions taken as 100 mass%.

When used for a heat transfer medium, the composition of the present disclosure may further contain lubricating oil. The lubricating oil is not limited. For example, known lubricating oils used for refrigerants etc. can be widely used.

Specific examples of lubricating oils include at least one member selected from the group consisting of polyalkylene glycols, polyol esters, and polyvinyl ethers. Examples of polyalkylene glycol (PAG) include SUNICE P56, produced by Japan Sun Oil Company, Ltd. Examples of polyol ester (POE) include Ze-GLES RB 32, produced by ENEOS Holdings, Inc. Examples of polyvinyl ether (PVE) include Daphne Hermetic Oil FVC-D Series, produced by Idemitsu Kosan Co., Ltd.

The lubricating oil may further contain one or more additives. Such additives may be at least one member selected from the group consisting of extreme-pressure agents, acid scavengers, oxygen scavengers, copper deactivators, anticorrosive agents, oily agents, and antifoaming agents.

In addition to the components described above, the composition of the present disclosure can further contain other additives or unavoidable elements or compounds (referred to below as "other components"). When the composition of the present disclosure contains such other components, the other component content can be 5 mass% or less, preferably 1 mass% or less, more preferably 0.1 mass% or less, and particularly preferably 0.05 mass% or less, based on the mass of the fluoroethylene.

The method for preparing the composition of the present disclosure is not limited. For example, fluoroethylene and an antioxidant are mixed in predetermined proportions to prepare the composition. In the mixing, the lubricating oil and/or other additives, such as those mentioned above, can also be blended as appropriate. The oxygen content of the composition can be adjusted to the desired range by blowing air or oxygen into the composition.

In the production of the fluoroethylene, if water and oxygen are present in fluoroethylene, the fluoroethylene present in which water and oxygen are present can also be used to the composition of the present disclosure. In this case, the water content of the composition can be adjusted, for example, by adding or removing water. To remove water, well-known methods can be widely used. Examples of usable methods include drying methods using adsorbents.

In the production of the composition of the present disclosure, the other components mentioned above may be present in the composition of the present disclosure. Such other components may be removed beforehand by an appropriate method and then the composition may be prepared, or without removing such other components, the composition may be used as is.

The composition of the present disclosure can be used for various applications, such as heat transfer media, foaming agents, solvents, cleaning agents, propellants, and fire extinguishers. Due to less degradation resulting from inhibition of the formation of hydrogen fluoride, the quantity of such heat transfer media, foaming agents, solvents, cleaning agents, propellants, fire extinguishing agents, etc. can be maintained over a long period of time.

### 2. Method for Stabilizing the Composition Containing Fluoroethylene

The present disclosure includes an invention relating to a method for stabilizing a composition containing fluoroethylene.

The method for stabilizing a composition containing fluoroethylene according to the present disclosure includes the step of allowing a fluoroethylene-containing refrigerant and an antioxidant to be present together to obtain a composition. The antioxidant content of the composition is set to 1 to 20000 ppm by mass based on the mass of the fluoroethylene. The total mass of the refrigerant and the antioxidant accounts for 95 mass% or more of the entire composition. The method for allowing these components to be present together is not limited. For example, these components may be mixed. The total mass of the fluoroethylene, the antioxidant, and one or more other components with refrigerant functions preferably accounts for 97 mass% or more, and more preferably 99 mass% or more, of the entire composition. The upper limit for the total mass of the refrigerant and the antioxidant is not limited. For example, the total mass of the refrigerant and the antioxidant preferably accounts for 100 mass%, and more preferably 99.9 mass%, of the entire composition taken as 100 mass%.

The fluoroethylene to be used can be the same as those mentioned above.

The amount of the antioxidant is 1 ppm by mass or more, preferably 10 ppm by mass or more, and more preferably 100 ppm by mass or more, based on the mass of fluoroethylene. Setting the amount of the antioxidant to 1 ppm by mass or more based on the mass of fluoroethylene can inhibit the decomposition of fluoroethylene and acid formation.

The amount of the antioxidant added is 20000 ppm by mass or less, preferably 10000 ppm by mass or less, and more preferably 2000 ppm by mass or less, based on the mass of fluoroethylene. By setting the amount of the antioxidant to 20000 ppm by mass or less based on the mass of fluoroethylene, the addition of an unnecessary amount of an antioxidant can be avoided.

The system in which the antioxidant and the fluoroethylene are present together is preferably substantially free of refrigeration oil. The refrigeration oil content is preferably 30000 ppm by mass or less, more preferably 5000 ppm by mass or less, even more preferably 1000 ppm by mass or less, and most preferably no refrigeration oil content (0 ppm by mass). Setting the refrigeration oil content to 30000 ppm by mass or less based on the mass of fluoroethylene can inhibit the formation of hydrogen fluoride in the system and thus suppress the degradation of fluoroethylene.

The antioxidant and the refrigerating machine oil to be used can also be the same as those mentioned above.

The system in which the antioxidant and the refrigerant (and optionally refrigerating machine oil) are present together may further contain oxygen. The oxygen content is preferably 5000 ppm by mass or less, more preferably 3000 ppm by mass or less, and even more preferably 1000 ppm by mass or less, based on the mass of fluoroethylene. Setting the oxygen content of the system in which the refrigerant and the antioxidant are present together to 5000 ppm by mass or less based on the mass of fluoroethylene can inhibit a decomposition reaction and a polymerization reaction of the fluoroethylene and also inhibit the formation of hydrogen fluoride in the composition, thereby suppressing the deterioration of the composition.

The system in which the antioxidant and fluoroethylene (and optionally refrigerating machine oil) are present together may further contain water.

Further, the water content of the system in which the antioxidant and fluoroethylene (and optionally refrigerating machine oil) are present together is preferably 100 ppm by mass or less, more preferably 50 ppm by mass or less, and even more preferably 20 ppm by mass or less, based on the mass of fluoroethylene. Adjusting the water content to 100 ppm by mass or less based on the mass of fluoroethylene can inhibit solid formation due to a side reaction or the like, thus ensuring the stability of the fluoroethylene.

The system in which the antioxidant and fluoroethylene (and optionally refrigerating machine oil) are present together may contain substances other than those mentioned above as long as the effect or purpose of the stabilization method according to the present disclosure is not impaired. As such substances, those described above for the composition of the present disclosure are usable and can be contained in the same amounts.

Embodiments according to the present disclosure are described above. However, the present disclosure is not limited to these embodiments. Various modifications can be made without departing from the gist of the present disclosure.

### Examples

The present invention is described specifically with reference to Examples. However, the embodiments of the present disclosure are not limited to these Examples.

### Example 1

0.466 pmol of BHT was placed in a glass tube (inner diameter: 8 mm; outer diameter: 12 mm; length: 300 mm) with one side sealed by fusing. Further, 1,2-difluoroethylene was added so that the amount of 1,2-difluoroethylene added was 8.9 mmol. Subsequently, 100 ppm by mass of oxygen was added to the 1,2-difluoroethylene. The tube was then hermetically sealed by fusing. This tube was allowed to stand in a constant-temperature bath in an atmosphere at 175°C and kept in this state for 2 weeks. The tube was then removed from the constant-temperature bath. Gas remaining in the tube was completely solidified by using liquid nitrogen. The tube was then opened and gradually thawed to collect gas into a Tedlar bag. 5 g of pure water was injected into the Tedlar bag to extract the acid into the pure water while efficiently bringing the pure water into contact with the collected gas. The extract was detected by ion chromatography to measure the content (ppm by mass) of fluoride ions (F⁻). The amount of fluoride ions thus measured was regarded as the amount of hydrogen fluoride produced. As a result, the amount of hydrogen fluoride produced was found to be 1 ppm or less.

### Comparative Example 1

An evaluation test was performed in the same manner as in Example 1 except that BHT was not added. After the test, the gas inside the tube was analyzed. The amount of hydrogen fluoride produced was found to be 67 ppm.

### Comparative Example 2

1.2 g of a polyol ester refrigeration oil containing approximately 2 mass% of BHT was placed in a glass tube (inner diameter: 8 mm; outer diameter: 12 mm; length: 300 mm) with one side sealed by fusing. Further, 1,2-difluoroethylene was added so that the amount of 1,2-difluoroethylene added was 8.9 mmol. Subsequently, 100 ppm by mass of oxygen was added to the 1,2-difluoroethylene. In the tube, 109 pmol of BHT was present, which means that 210 mass% of refrigeration oil was present relative to 1,2-difluoroethylene. The tube was then hermetically sealed by fusing. The tube was allowed to stand in a constant-temperature bath in an atmosphere at 175°C and kept in this state for 2 weeks. This tube was then removed from the constant-temperature bath and gas analysis was performed in the same manner as in Example 1. In spite of the presence of an excess of BHT, the amount of hydrogen fluoride produced was 11 ppm.

## Claims

1. A composition comprising
a refrigerant and
an antioxidant,
the refrigerant containing fluoroethylene,
wherein
the antioxidant is present in an amount of 1 to 20000 ppm by mass based on the mass of the fluoroethylene, and
the total mass of the refrigerant and the antioxidant accounts for 95 mass% or more of the entire composition taken as 100 mass%.

2. The composition according to claim 1, comprising a refrigeration oil in an amount of 0 to 30000 ppm by mass based on the mass of the fluoroethylene.

3. The composition according to claim 1 or 2, wherein the antioxidant is at least one member selected from the group consisting of phenols, alkyl catechols, benzoquinones, phenothiazines, terpenes, terpenoids, and phthalates.

4. The composition according to claim 3, wherein the antioxidant is at least one member selected from the group consisting of dibutylhydroxytoluene, myrcene, pinene, and limonene.

5. The composition according to any one of claims 1 to 4, further comprising oxygen, wherein the oxygen is present in an amount of 5000 ppm by mass or less based on the mass of the fluoroethylene.

6. A method for stabilizing a composition containing fluoroethylene, the method comprising allowing a refrigerant and an antioxidant to be present together to obtain a composition comprising the refrigerant and the antioxidant,
the refrigerant containing fluoroethylene,
the antioxidant being present in an amount of 1 to 20000 ppm by mass based on the mass of the fluoroethylene, and
the total mass of the refrigerant and the antioxidant accounting for 95 mass% or more of the entire composition taken as 100 mass%.
